# EUROPÄISCHE PATENTSCHRIFT

(11) **EP 0 602 461 B1**
(45) Veröffentlichungstag und Bekanntmachung des Hinweises auf die Patenterteilung: **10.06.1998**
(21) Anmeldenummer: 93119410.4
(22) Anmeldetag: 02.12.1993
(51) Int. Cl.: B65G 67/60

(54) **Senkrechtförderer zum Be- und Entladen von Stückgut, insbesondere Schiffsbe- und -entlader**
Vertical conveyor for loading and unloading piece goods, especially for ships
Convoyeur vertical pour charger et décharger des marchandises en vrac, notamment pour navires

(30) Priorität: 18.12.1992 DE 4243013
(43) Veröffentlichungstag der Anmeldung: 22.06.1994
(73) Patentinhaber: Krupp Fördertechnik GmbH, 45143 Essen (DE)
(72) Erfinder: Zimmer, Karl-Ernst, D-66292 Riegelsberg (DE)

(56) Entgegenhaltungen:
- AT-B- 392 253
- US-A- 1 461 638

## Beschreibung

Die Erfindung betrifft einen Senkrechtförderer zum Be- und Entladen von Stückgut, insbesondere Schiffsbe- und -entlader, der in seinem oberen Bereich mit einer Zu- bzw. Abführeinrichtung und in seinem unteren Bereich mit einer Ab- bzw. Zuführeinrichtung zusammenwirkt, wobei das Stückgut im Bereich der jeweiligen Zu- bzw. Abführeinrichtung mittels beabstandeter, an Zugorganen befestigter Finger aufgenommen bzw. abgesetzt wird, die zwischen mit Abstand zueinander vorgesehenen, dem Senkrechtförderer zugewandten, im wesentlichen horizontal angeordneten Übergabebereichen führbar sind.

Die DE-A-32 06 083 betrifft einen Senkrechtförderer gemäß dem Oberbegriff des Anspruchs 1 mit einem Träger, der sich in einer geschlossenen schleifenförmigen Bahn bewegt und dessen Aufnahmefläche stets horizontal bleibt. Wenigstens ein Rollenförderer erstreckt sich in jeden aufsteigenden und absteigenden Teil der Bahn. Der Träger und die in die Bahnteile vorstehenden Rollen der Rollenförderer sind derart freitragend ausgebildet, daß der Träger sich zum Zwecke der Zu- und der Abförderung von Gegenständen durch die Rollen des Rollenförderers hindurch bewegen kann. Das im wesentlichen horizontal zugeführte Stückgut wird mittels der Träger somit stoßartig von den Rollenförderern abgehoben und in die Vertikale überführt und dabei von der Geschwindigkeit null auf maximale Geschwindigkeit beschleunigt, wobei nicht ausgeschlossen werden kann, daß insbesondere bei empfindlichem Gut, wie in Kartons vorgesehenen Lebensmitteln oder dgl., eine Beschädigung nicht ausgeschlossen werden kann. Gleiches gilt für den Abgabebereich, in welchem das Stückgut schlagartig auf den wieder übernehmenden Rollenförderer aufgesetzt wird. Darüber hinaus muß der Vertikalförderer neben den horizontal zu- bzw. abführenden Förderern vorgesehen werden, was letztendlich zu einer Erhöhung des Gesamtbauraumes führt. Eine derartige Einrichtung wäre für die Schiffsbe- und -entladung nicht geeignet, zumal hier im Hinblick auf die geringen Abmessungen der Ladeluken erhebliche Probleme bestehen, einen derartigen Senkrechtförderer überhaupt in den Laderaum einzubringen.

Der DE-A-28 25 553 ist ein Schiffsentlader zum kontinuierlichen Entladen von Stückgut zu entnehmen, der zwei Gurtbandförderer beinhaltet. Einer der Gurtbandförderer ist über eine untere Bandschleife so ausgestaltet, daß er Stückgut aufnehmen und im wesentlichen horizontal transportieren kann. Im Übergabe- sowie im Vertikalbereich ist ein weiterer parallel zum ersten Gurtbandförderer vorgesehener Bandförderer vorgesehen, so daß das Stückgut, zwischen den beiden Bandförderern geklemmt, einerseits von der Horizontalen in die Vertikale umgelenkt und andererseits im oberen Bereich auf einen Kurvenförderer abgeworfen werden kann. Nachteilig ist hier festzustellen, daß eine Vielzahl von Bauteilen notwendig sind, um das Stückgut sicher umzulenken und vertikal nach oben zu transportieren, wobei das Stückgut im oberen Bereich ebenfalls nochmals umgelenkt werden muß, ehe es einem Kurvenförderer über eine Rutsche aufgegeben wird. Infolge der Lageänderung des Stückgutes werden z.T. erhebliche Kräfte auf das ggf. empfindliche Stückgut, wie mit Äpfeln, Bananen oder dgl. gefüllte Kartons, ausgeübt, so daß auch hier nicht ausgeschlossen werden kann, daß Beschädigungen am Stückgut auftreten.

Die EP-B-125 715 betrifft eine Fördervorrichtung, insbesondere zum Be- und/oder Entladen von Schiffen, die als Senkrechtförderer einen wendelförmigen Bandförderer beinhaltet. Der untere Zu- bzw. Abführbereich wird durch einen heb- und senkbaren Teleskopförderer gebildet. Im oberen Bereich wird das Material unmittelbar über Band- oder Rollenförderer zu- bzw. abgeführt. Nachteilig ist hier festzustellen, daß bei Drehung des Vertikalförderers im oberen Bereich es Schwierigkeiten bei der Zu- bzw. Abführung des Stückgutes kommen kann, da der Übergabeförderer sich der jeweiligen Wendelsteigung anpassen muß. Ferner nachteilig ist, daß infolge der wendelartigen Ausführung des Senkrechtförderers verhältnismäßig viel Stückgut im Senkrechtförderer vorhanden ist, so daß dieser relativ schwer wird. Infolge des verhältnismäßig großen Wendeldurchmessers verliert das Gesamtgerät an Bewegungsfreiheit in der Ladeluke, wobei auch der zugehörige Teleskopförderer am Fuß der Wendel eine entsprechend große Ausladung haben muß. Zudem ist der Teleskopförderer tangential zur Wendel angeordnet, wodurch beim Drehen des Teleskopförderers auch gleichzeitig ein Verfahren des Gesamtgerätes erforderlich wird.

Aus der EP-A-0 407 643 ist noch eine Vorrichtung zum Be- und Entladen, insbesondere von Schiffen mit Stückgut und/oder mit beladenen Paletten, bekannt, bei der der an einem waagerecht verfahrbaren Tragrahmen aufgehängte Stückgut-Vertikalbeförderer mit einer integrierten unteren waagerechten Förderstrecke in ein teleskopierbares Gehäuse des Senkrechtförderers eingefahren werden kann. Eine kurze obere waagerechte Förderstrecke ist im Bereich des verfahrbaren Tragrahmens ausgebildet. Der oberen und unteren waagerechten Förderstrecke schließt sich jeweils eine zu- bzw. abfördernde Transportbahn bzw. Transportgutaufnahme- und -abgabevorrichtung an. Die Tragorgane des Senkrechtförderers sind z.B. als Transportplattformen ausgebildet und zwischen zwei mal zwei endlosen, paarweise parallel in der Tiefe versetzt angeordneten Zugmitteln, drehbar gelagert, eingehängt. Als Transportplattformen finden dabei Tragplatten, Stäbe oder Transportgut Verwendung. Im Transportzustand nehmen die Transportplattformen eine waagerechte Stellung ein und dienen zur Aufnahme des Transportgutes. Beim Rücklauf der Zugmittel liegen die Transportplattformen an dem Zugmittel an und werden im Bereich der unteren waagerechten Förderstrecke in die Transportguttragposition überführt. Sowohl die obere als auch die untere waagerechte Förderstrecke des Senkrechtförderers werden höhengleich nur bis an die sich anschließende Transportbahn bzw. Transportgutaufnahme- und Abgabevorrichtung herangeführt, so daß zumindest für kleine Stückgutgrößen eine stoßfreie Übergabe nicht in jedem Fall sichergestellt ist.

Aufgabe der Erfindung ist es, den im gattungsbildenden Teil des ersten Patentanspruches beschriebenen Senkrechtförderer dahingehend weiterzubilden, daß das Stückgut zum einen auf direktem Wege zum Bestimmungspunkt transportiert und zum anderen beim Drehen des Senkrechtförderers um 360° keine Höhenveränderung erfährt. Ferner soll der Aufwand an Konstruktion und Gewicht minimiert und die Bewegungsfreiheit, insbesondere in Ladeluken, erhöht werden.

Diese Aufgabe wird erfindungsgemäß dadurch gelöst , daß die Finger dergestalt in den jeweiligen Übergabebereich der Zu- bzw. Abführeinrichtung führbar sind, daß die Stückgutaufnahme bzw. -abgabe in Förderrichtung herbeiführbar ist, und daß die Umlenkung der Finger in den anschließenden senkrechtes Bereich des Senkrechförderers erst nach erfolgter Stückgutaufnahme bzw. -abgabe erfolgt.

Vorteilhafte Weiterbildungen des Erfindungsgegenstandes sind den Unteransprüchen zu entnehmen.

Im Gegensatz zum St.d.T. wird das angeförderte Stückgut von den zwischen die als Gummikettenförderer ausgebildeten Zu- bzw. Abführeinrichtungen führbaren Fingern in gleicher, im wesentlichen horizontaler Förderrichtung ohne bzw. mit vernachlässigbarer Stoßwirkung übernommen und erst dann, ohne seine Lage zu ändern, in eine senkrechte Förderrichtung umgeleitet. Im umgekehrten Sinne erfolgt die Übergabe von den Fingern auf den Gummikettenförderer.

Die Kombination der einzelnen Förderelemente (Senkrechtförderer, Teleskopförderer, Übergabeförderer und Kurvenförderer) erlaubt in ihrer Anordnung eine kompakte und schmale Bauweise, die sich insbesondere für das Be- und Entladen von Schiffsladeräumen eignet.

Das Stückgut wird somit auf direktem Wege transportiert und die Anzahl und damit das Gesamtgewicht des Stückgutes auf dem Transportweg kann erheblich reduziert werden. Der Senkrechtförderer wird durch die erfindungsgemäßen Maßnahmen in seinem Eigengewicht leichter und seinen Abmessungen geringer, wodurch er in seiner Bewegungsfreiheit, insbesondere in engen Laderäumen, optimiert wird.

Die mit den Fingern ausgerüsteten Zugorgane des Senkrechtförderers können in ihrer Geschwindigkeit in Abhängigkeit von dem Vorhandensein von Stückgut im jeweiligen Aufnahmebereich geregelt werden, wobei bei Nichtvorhandensein von Stückgut die Geschwindigkeit automatisch verringert bzw. ganz auf null geregelt wird. Die Wahrnehmung des Stückgutes erfolgt hierbei beispielsweise über Lichtschranken. Die Anzeige von Stückgut beschleunigt den Förderer wiederum, so daß im weiteren Verlauf wieder Stückgut übernommen und transportiert werden kann. Bei normalem Be- oder Entladevorgang entstehen jedoch keine Lücken, so daß die Zugorgane ständig mit gleicher Geschwindigkeit durchfahren können.

Durch Umschalten auf Handsteuerung kann die Verringerung der Geschwindigkeit bzw. Stillstand eliminiert werden, beispielsweise bei Restgutentleerung.

Der Erfindungsgegenstand ist anhand eines Ausführungsbeispieles in der Zeichnung dargestellt und wird wie folgt beschrieben. Es zeigen:
- Figur 1: - Prinzipskizze des erfindungsgemäßen Senkrechtförderers in der Seitenansicht
- Figur 2: - Draufsicht auf den Kurvenförderer in der Stellung 'Entladen'
- Figur 3: - Draufsicht auf den Kurvenförderer in der Stellung 'Beladen'
- Figur 4: - Schnitt durch den Übergabebereich zwischen Senkrechtförderer und Teleskopförderer.

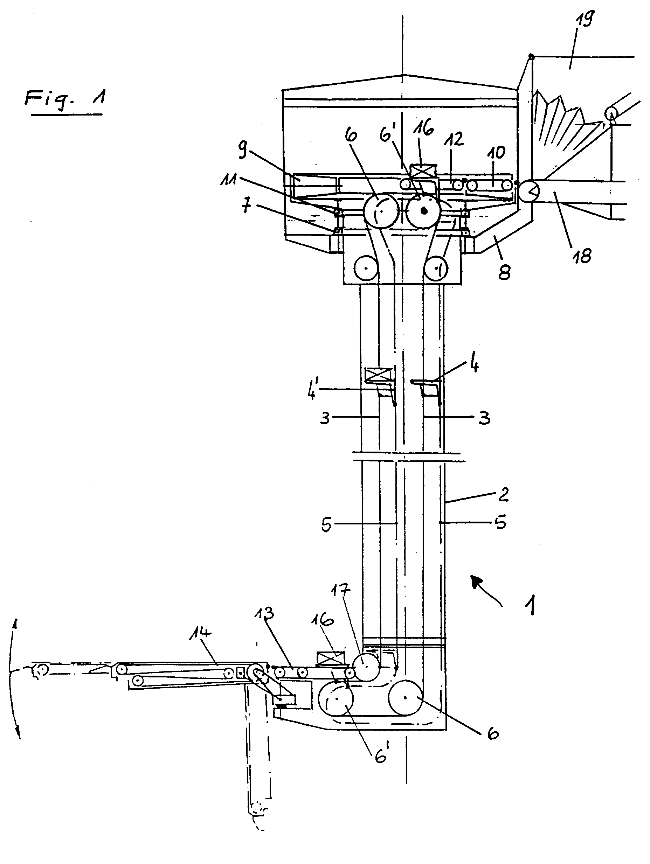

Figur 1 zeigt den erfindungsgemäßen Senkrechtförderer 1 im Querschnitt. Dargestellt ist ein mittiges Traggestell 2, in welchem zwei endlos umlaufende Zugorgane 3 vorgesehen sind, die in vorgegebenen Abständen angeordnete, mit Fingern 4 versehene Tragelemente 4' aufweisen, die in Führungen 5 geführt sind. Die Umlenkung der Zugorgane 3 erfolgt mittels Umlenkscheiben 6 bzw. 6'. Im oberen Bereich des Traggestelles 2 ist dieses mittels einer verzahnten Kugeldrehverbindung 7 auf einem oberen Stützrahmen 8 drehbeweglich gelagert. Ebenfalls im oberen Bereich des Traggestells 2 ist ein drehbarer Kurvenförderer 9 mit einer Zu- bzw. Abführeinrichtung 10 mittels einer Kugeldrehverbindung 11 auf dem Traggestell 2 gelagert. Der Übergabebereich 12 vom Senkrechtförderer 1 zum Kurvenförderer 9 wird durch mit Abstand zueinander vorgesehene Gummikettenförderer 12 gebildet. Im unteren Bereich des Senkrechtförderers 1 wird der Übergabebereich 13 ebenfalls durch mit Abstand zueinander vorgesehene Gummikettenförderer gebildet, an welche sich ein heb- und senkbarer sowie schwenkbarer Teleskopförderer 14 anschließt. Die Umlenkrollen 6' sind hierbei unmittelbar unterhalb der jeweiligen Übergabebereiche 12 bzw. 13 vorgesehen.

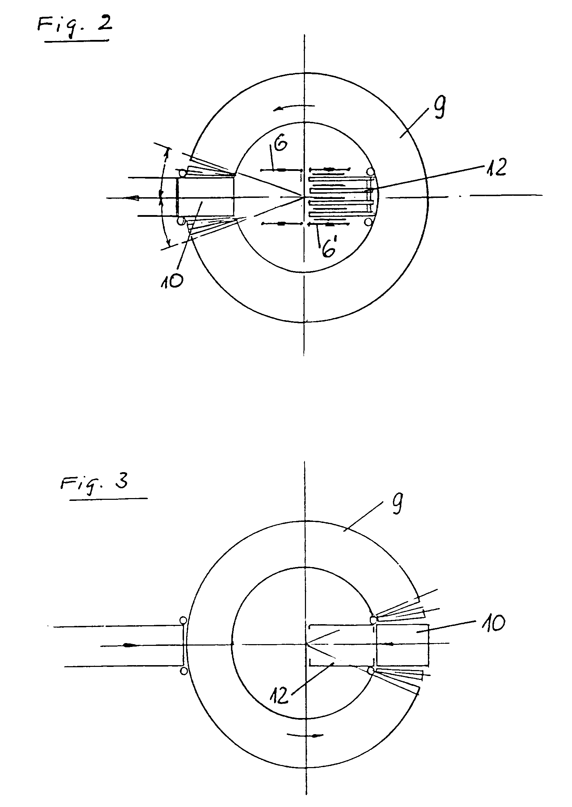

Figur 2 zeigt die Draufsicht auf den drehbaren Kurvenförderer 9 in der Stellung 'Entladen'. Erkennbar sind hier die Umlenkscheiben 6 und 6', der Zu-bzw. Abförderer 10 sowie die Gummikettenförderer 12.

Figur 3 zeigt in der Draufsicht den Kurvenförderer 9 in der Stellung 'Beladen', wobei die Zu- bzw. Abführeinrichtung 10 nunmehr um 180^{o} zu Figur 2 steht. Lediglich angedeutet sind die Gummikettenförderer 12.

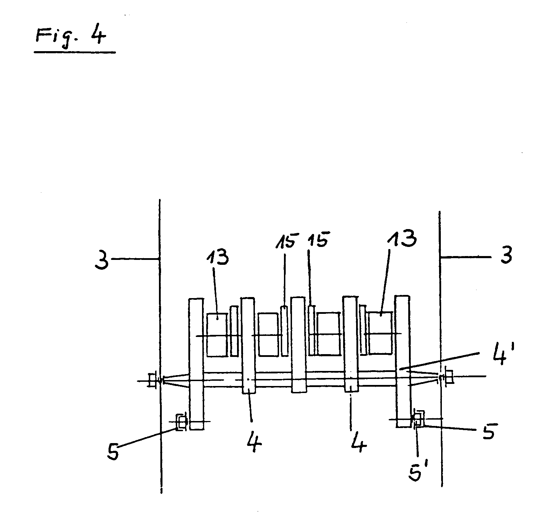

Figur 4 zeigt als Schnitt den unteren Übergabebereiches 13, der durch die Gummikettenförderer gebildet wird. Erkennbar sind hier die Finger 4, die parallel zu den Gummikettenförderern 13 verlaufen. Lediglich angedeutet sind die Zugorgane 3, die mit den Fingern 4 bzw. den hier nicht weiter erkennbaren Tragelementen 4' verbunden sind. Ferner angedeutet sind die Führungen 5, in welchen Laufrollen 5' abrollen. Neben den Gummikettenförderern 13 und den Fingern 4 sind ebenfalls parallel zu den beiden verlaufende Bremskufen 15 vorgesehen, die das Stückgut 16 (Figur 1) von den Gummikettenförderern 13 abheben und still setzen.

Der Fördervorgang stellt sich etwa wie folgt dar:

Beim Entladen gelangt das Stückgut 16 über den Teleskopförderer 14 zu den unteren Gummikettenförderern 13 und wird dort mittels der zwischen den Gummikettenförderern 13 vorgesehenen Bremskufen 15 abgehoben und stillgesetzt. Beim Umlauf der mit den Fingern 4 versehenen Tragelemente 4' um die Umlenkscheiben 6' wird das Stückgut 16 von den Bremskufen 15 abgehoben, dergestalt, daß die Finger 4 zunächst im wesentlichen parallel unterhalb des Stückgutes 16 geführt werden und das Stückgut 16 anschließend in horizontaler Förderrichtung (Pfeilrichtung) im wesentlichen stoßfrei aufnehmen, ehe die Tragelemente 4', ohne eine Lageänderung des Stückgutes 16 herbeizuführen, mittels weiterer Umlenkelemente 17 in die Vertikalposition geführt werden. Im oberen Bereich des Senkrechtförderers 1 wird das Stückgut 16 von den Fingern 4 der Tragelemente 4' auf die als Übergabebereich ausgebildeten Gummikettenförderer 12 beim Umlauf in die oberen Umlenkscheiben 6' stoßfrei abgelegt, da auch hier der Fördervorgang im wesentlichen parallel und horizontal zum oberen Übergabebereich 12 erfolgt, und zwar solange, bis das Stückgut 16 abgesetzt ist. Die Gummikettenförderer 12 transportieren das Stückgut 16 anschließend über die Abführeinrichtung 10 zum Kurvenförderer 9. Von hier gelangt das Stückgut in diesem Beispiel auf ein nachgeschaltetes Entladeband 18 eines Auslegers 19.

Beim Beladen wird der Kurvenförderer 9 am Senkrechtförderer 1 mit der Zu-bzw. Abführeinrichtung 10 zu den Gummikettenförderern 12 angelenkt und der Vorgang wiederholt sich in umgekehrtem Sinn, indem die Bremskufen 15 zwischen den Gummikettenförderern 12 im oberen Teil ausgefahren und die Bremskufen 15 zwischen den Gummikettenförderern 13 im unteren Teil des Senkrechtförderers 1 eingefahren werden.

Die Steuerung des Senkrechtförderers 1 wird dergestalt realisiert, daß die Zugorgane 3 mit den daran angelenkten Tragelementen 4 in ihrer Geschwindigkeit geregelt werden können, d.h. vor dem Einfahren in die Lücken zwischen den Gummikettenförderern 12 bzw. 13 wird die Geschwindigkeit bei Nichtvorhandensein eines Stückgutes 16 auf den Bremskufen 15 automatisch verringert und geht bei Bedarf bis zum Stillstand. Die Wahrnehmung des Stückgutes 16 erfolgt beispielsweise über nicht weiter dargestellte Lichtschranken. Die Anzeige eines Stückgutes 16 beschleunigt die Zugorgane 3, so daß wieder Stückgut 16 übernommen werden kann. Bei normalem Entladevorgang entstehen keine Abstände zwischen einzelnen Stückgütern 16, so daß die Zugorgane 3 immer mit gleicher Geschwindigkeit umlaufen können.

## Patentansprüche

1. Senkrechtförderer zum Be- und Entladen von Stückgut, insbesondere Schiffsbe- und -entlader, der in seinem oberen Bereich mit einer Zu-bzw. Abführeinrichtung (10, 18) und in seinem unteren Bereich mit einer Ab- bzw. Zuführeinrichtung (14) zusammenwirkt, wobei das Stückgut (16) im Bereich der jeweiligen Zu- bzw. Abführeinrichtung (10,18,14) mittels beabstandeter, an Zugorganen (3) befestigter Finger (4) aufgenommen bzw. abgesetzt wird, die zwischen mit Abstand zueinander vorgesehenen, dem Senkrechtförderer (1) zugewandten, im wesentlichen horizontal angeordneten Übergabebereichen (12, 13) führbar sind,
dadurch gekennzeichnet, daß die Finger (4) dergestalt in den jeweiligen Übergabebereich (12,13) der Zu- bzw. Abführeinrichtung (10,18,14) führbar sind, daß die Stückgutaufnahme bzw. -abgabe in Förderrichtung herbeiführbar ist, und daß die Umlenkung der Finger (4) in den anschließenden senkrechten Bereich des Senkrechtförderers erst nach erfolgter Stückgutaufnahme bzw. -abgabe erfolgt.

2. Senkrechtförderer nach Anspruch 1, dadurch gekennzeichnet, daß die Übergabebereiche durch parallel zu den Fingern (4) verlaufende Bandförderer (12,13) gebildet sind.

3. Senkrechtförderer nach Anspruch 2, dadurch gekennzeichnet, daß die Bandförderer (12,13) als Gummikettenförderer ausgebildet sind.

4. Senkrechtförderer nach den Ansprüchen 2 oder 3, dadurch gekennzeichnet, daß zwischen den Bandförderern (12,13) das Stückgut (16) abbremsende Bauteile (15) vorgesehen sind.

5. Senkrechtförderer nach Anspruch 4, dadurch gekennzeichnet, daß die abbremsenden Bauteile (15) kufenförmig ausgebildet sind.

6. Senkrechtförderer nach den Ansprüchen 4 oder 5, dadurch gekennzeichnet, daß die abbremsenden Bauteile (15) heb- und senkbar zwischen den Bandförderern (12,13) angeordnet sind.

7. Senkrechtförderer nach den Ansprüchen 1 bis 6, dadurch gekennzeichnet, daß unterhalb des jeweiligen Übergabebereiches (12,13) Umlenkelemente(6,6')für die Zugorgane (3) vorgesehen sind.

8. Senkrechtförderer nach den Ansprüchen 1 bis 7, gekennzeichnet durch einen oberen drehbar gelagerten Kurvenförderer (9).

9. Senkrechtförderer nach den Ansprüchen 1 bis 8, dadurch gekennzeichnet, daß der untere Zu- bzw. Abführbereich (14) durch einen schwenk-, heb- und senkbaren Teleskopförderer gebildet ist.

10. Senkrechtförderer nach den Ansprüchen 1 bis 9, dadurch gekennzeichnet, daß die Geschwindigkeit der Zugorgane (3) in Abhängigkeit von dem Vorhandensein von Stückgut (16) im Bereich der jeweiligen Zuführeinrichtung (10,14), insbesondere der Übergabebereiche (12,13) steuerbar ist.

11. Senkrechtförderer nach Anspruch 10, dadurch gekennzeichnet, daß die Geschwindigkeit der Zugorgane (3) bei Nichtvorhandensein von Stückgut (16) automatisch verringerbar und bei Bedarf auf null steuerbar ist.

12. Senkrechtförderer nach den Ansprüchen 10 oder 11, dadurch gekennzeichnet, daß die Wahrnehmung des Stückgutes (16) über mindestens eine Lichtschranke erfolgt.

## Claims

1. Vertical conveyor for loading and unloading unit load material, in particular ship loading and unloading means, which in its upper area cooperates with a feed and discharge system (10, 18) and in its lower area cooperates with a discharge and feed system (14) respectively, whereby in the area of the respective feed or discharge system (10, 18, 14), the unit load material (16) is respectively taken up and set down by means of spaced fingers (4) fastened to traction elements (3), and said fingers may be guided between transfer areas (12, 13) arranged essentially horizontally at a distance from one another to face the vertical conveyor (1), characterised in that the fingers (4) may be guided into the respective transfer area (12, 13) of the feed or discharge system (10, 18, 14) in such a way that the take-up or discharge of the unit load material may occur in transport direction, and that the deflection of the fingers (4) in the adjoining vertical area of the vertical conveyor only occurs after take-up or discharge of the unit load material has been accomplished.

2. Vertical conveyor according to Claim 1, characterised in that the transfer areas are formed by belt conveyors (12, 13) running parallel to the fingers (4).

3. Vertical conveyor according to Claim 2, characterised in that the belt conveyors (12, 13) are provided in the form of rubber chain conveyors.

4. Vertical conveyor according to Claim 2 or 3, characterised in that structural parts (15) braking the unit load material (16) are provided between the belt conveyors (12, 13).

5. Vertical conveyor according to Claim 4, characterised in that the braking structural parts (15) are provided in skid form.

6. Vertical conveyor according to Claims 4 or 5, characterised in that the braking structural parts (15) are arranged between the belt conveyors (12, 13) so as to be raised and lowered.

7. Vertical conveyor according to Claims 1 to 6, characterised in that deflection elements (6, 6') are provided for the traction elements (3) below the respective transfer area (12, 13).

8. Vertical conveyor according to Claims 1 to 7, characterised by an upper rotatably mounted curved conveyor (9).

9. Vertical conveyor according to Claims 1 to 8, characterised in that the lower feed and discharge system (14) is formed by a telescopic conveyor, which may be raised, lowered and swivelled.

10. Vertical conveyor according to Claims 1 to 9, characterised in that the speed of the traction elements (3) may be controlled in dependence upon the presence of unit load material (16) in the region of the respective feed system (10, 14), in particular of the transfer areas (12, 13).

11. Vertical conveyor according to Claim 10, characterised in that the speed of the traction elements (3) may be automatically reduced and, if necessary, set to zero in the absence of unit load material (16).

12. Vertical conveyor according to Claim 10 or 11, characterised in that the detection of unit load material (16) is performed via at least one photoelectric barrier.

## Revendications

1. Convoyeur vertical pour charger et décharger des marchandises en vrac, notamment pour navires, qui coopère dans sa partie supérieure avec un dispositif d'amenage ou d'évacuation (10, 18) et dans sa partie inférieure avec un dispositif d'évacuation ou d'amenage (14), où les marchandises en vrac (16) sont prises ou déposées, dans la partie du dispositif d'amenage ou d'évacuation respectif (10, 18, 14), au moyen de doigts (4) distants fixés à des organes de traction (3) lesquels doigts sont dirigeables entre les aires de transfert (12, 13) disposées essentiellement en position horizontale à distance l'une de l'autre et tournées vers le convoyeur vertical (1),
caractérisé en ce que les doigts (4) peuvent être dirigés de telle façon dans l'aire de transfert respective (12, 13) du dispositif d'amenage ou d'évacuation (10, 18, 14) que le levage ou la remise des marchandises en vrac peut s'effectuer dans le sens de transport et que le renvoi des doigts (4) dans la partie verticale suivante du convoyeur vertical (1) ne se fait qu'après levage ou remise des marchandises en vrac.

2. Convoyeur vertical suivant revendication 1, caractérisé en ce que les aires de transfert sont constituées par des convoyeurs à bande (12, 13) s'étendant parallèlement aux doigts (4).

3. Convoyeur vertical suivant revendication 2, caractérisé en ce que les convoyeurs à bande (12, 13) sont réalisés comme convoyeurs à chaîne en caoutchouc.

4. Convoyeur vertical suivant les revendications 2 ou 3, caractérisé en ce que des éléments de construction (15) sont prévus entre les convoyeurs à bande (12, 13) pour freiner les marchandises en vrac (16).

5. Convoyeur vertical suivant revendication 4, caractérisé en ce que les éléments de construction freinants (15) sont conçus en forme de patin.

6. Convoyeur vertical suivant les revendications 4 ou 5, caractérisé en ce que les éléments de construction freinants (15) sont disposés entre les convoyeurs à bande (12, 13) de manière à pouvoir être levés ou abaissés.

7. Convoyeur vertical suivant les revendications 1 à 6, caractérisé en ce que, en-dessous de l'aire de transfert respective (12, 13), sont prévus des éléments de renvoi (6, 6') pour les organes de traction (3).

8. Convoyeur vertical suivant les revendications 1 à 7, caractérisé en ce qu'il possède un convoyeur curviligne supérieur (9) logé de façon orientable.

9. Convoyeur vertical suivant les revendications 1 à 8, caractérisé en ce que le dispositif d'amenage ou d'évacuation inférieur (14) est constitué par un convoyeur télescopique pivotable, levable et abaissable.

10. Convoyeur vertical suivant les revendications 1 à 9, caractérisé en ce que la vitesse des organes de traction (3) peut être réglée en fonction de la présence de marchandises en vrac (16) dans l'aire du dispositif d'amenage respectif (10, 14), notamment dans les aires de transfert (12, 13).

11. Convoyeur vertical suivant revendication 10, caractérisé en ce que la vitesse des organes de traction (3) peut être réduite automatiquement ou, au besoin, être réglée à zéro en absence de marchandises en vrac (16).

12. Convoyeur vertical suivant les revendications 10 ou 11, caractérisé en ce que la perception de la marchandise en vrac (16) s'effectue par au moins une barrière lumineuse.
